# EUROPÄISCHE PATENTANMELDUNG

(11) **EP 4 530 685 A1**
(43) Veröffentlichungstag der Anmeldung: **02.04.2025**
(21) Anmeldenummer: 23200490.3
(22) Anmeldetag: 28.09.2023
(51) Int. Cl.: G02B 5/04, G01N 21/53, G08B 17/103

(54) **OPTISCHES PRISMA UND PARTIKELDETEKTIONSEINHEIT MIT OPTISCHEM PRISMA**

(71) Anmelder: Wagner Group GmbH, 30853 Langenhagen (DE)
(72) Erfinder: Filippini, Daniel, 30900 Wedemark (DE); Siemens, Andreas, 30880 Laatzen (DE); Janz, Marcel, 30938 Großburgwedel (DE)
(74) Vertreter: Götz, Gudrun Veronika

(57) **Zusammenfassung**

Die Erfindung betrifft eine Partikeldetektionseinheit (300) mit einem ersten optischen Prisma (101) und einem zweiten optischen Prisma (102), einem Gehäuse (200), das eine darin angeordnete und von Umgebungslicht abgeschirmte Detektionskammer (230) begrenzt sowie einen ersten Prismensitz (241) und einen zweiten Prismensitz (242) aufweist, wobei die Prismen (101, 102) jeweils innerhalb eines Prismensitzes (241, 242) angeordnet und zueinander ausgerichtet sind, sowie mit einer Leiterplatte (310) und einem Lichtsender (320) zum Aussenden von Lichtstrahlen in einer Ausstrahlrichtung sowie einem Lichtempfänger (330) zum Empfangen von in einem Einfallsbereich des Lichtempfängers (330) einfallenden Lichtstrahlen. Der Lichtsender (320) mit dem ersten Prismensitz (241) und der Lichtempfänger (330) mit dem zweiten Prismensitz (242) sind zusammenwirkend auf derselben Leiterplatte (310) positioniert , sodass vom Lichtsender (320) in Ausstrahlrichtung gesendete Lichtstrahlen eine erste Prismenfläche (110) des durch den ersten Prismensitz (241) ausgerichteten ersten Prismas (101) passierend auf dessen innenliegende Reflexionsfläche (130) auftreffen und der Einfallsbereich des Lichtempfängers (330) eine erste Prismenfläche (110) des durch den zweiten Prismensitz (242) ausgerichteten zweiten Prismas (102) passierend auf dessen innenliegende Reflexionsfläche (130) ausgerichtet ist. Die Prismen (101, 102) weisen eine erste Linse (111) und eine zweite Linse (121) auf.

## Beschreibung

Die Erfindung betrifft ein optisches Prisma für eine Partikeldetektionseinheit, welches Prisma eine erste Prismenfläche und eine zweite Prismenfläche aufweist, über welche jeweils Lichtstrahlen in das Innere des optischen Prismas ein- oder austreten können, sowie eine innenliegende Reflexionsfläche, die im Inneren des optischen Prismas verlaufende und darauf auftreffende Lichtstrahlen reflektiert. Die Erfindung betrifft außerdem ein Gehäuse für eine Partikeldetektionseinheit, welches Gehäuse eine Oberschale und eine Unterschale aufweist, die zur Begrenzung einer innerhalb des Gehäuses angeordneten und von Umgebungslicht abgeschirmten Detektionskammer miteinander verbindbar sind.

Die Erfindung betrifft außerdem eine Partikeldetektionseinheit mit einem ersten optischen Prisma und einem zweiten optischen Prisma, einem Gehäuse, das eine darin angeordnete und von Umgebungslicht abgeschirmte Detektionskammer begrenzt sowie einen ersten Prismensitz und einen zweiten Prismensitz aufweist, wobei die Prismen jeweils innerhalb eines Prismensitzes angeordnet und zueinander ausgerichtet sind. Die Partikeldetektionseinheit weist ferner eine Leiterplatte und einen Lichtsender zum Aussenden von Lichtstrahlen in einer Ausstrahlrichtung sowie einen Lichtempfänger zum Empfangen von in einem Einfallsbereich des Lichtempfängers einfallenden Lichtstrahlen auf.

Partikeldetektionseinheiten werden oftmals für die Branderkennung, insbesondere in Gebäuden, Fahrzeugen, auf Schiffen usw. eingesetzt, wobei in der Umgebungsluft eines Überwachungsbereichs enthaltene Partikel, bspw. Rauchpartikel oder auch Aerosole, die auf einen Brand oder dessen Entstehung schließen lassen, mittels der Partikeldetektionseinheit erkannt werden. Bei einem Überwachungsbereich handelt es sich in der Regel um einen zu überwachenden Bereich, in dem sich Personen aufhalten, (wertvolle) Güter lagern und/oder eine erhöhte Brandgefahr besteht. Überwachungsbereiche können Teile eines Gebäudes, wie Räume, Lagerräume oder Serverräume sein, Teile eines Fahrzeugs, bspw. eines Schiffs, Zugs, Busses oder Flugzeugs, wie Fahrgastabteile oder Maschinenräume, aber auch ein Bereich in unmittelbarer Umgebung oder innerhalb eines Objekts, wie einer Maschine oder eines Schaltschranks.

Zur Erkennung von Partikeln befindet sich im Inneren des Gehäuses der Partikeldetektionseinheit die mit der Umgebungsluft in fluidleitendem Austausch stehende Detektionskammer. Der tatsächliche Detektionsbereich, innerhalb dessen mit der Umgebungsluft in die Detektionskammer transportierte Partikel erfasst werden können, wird üblicherweise durch Überlagerung der Lichtstrahlen des Lichtsenders und des Einfallsbereichs des Lichtempfängers innerhalb der Detektionskammer definiert. Bei der Detektion werden die Partikel durch das vom Lichtsender ausgesendete Licht angestrahlt und können entweder anhand des durch die Partikel reduzierten Durchlichts (Durchlichtdetektor) oder aber anhand des an den Partikeln gestreuten Streulichts (Streulichtdetektor) vom Lichtempfänger erkannt werden. Um sicherzustellen, dass ausschließlich das vom Lichtsender gesendete Licht die im Detektionsbereich befindlichen Partikel erreicht, ist die Detektionskammer von Umgebungslicht abgeschirmt.

Ein bekannter Anwendungsfall für die Verwendung von Partikeldetektionseinheiten sind Ansaugrauchmelder, auch als Ansaugpartikelerkennungssysteme bezeichnet. Ein Ansaugpartikelerkennungssystem umfasst mindestens eine Rohr- und/oder Schlauchleitung, die über eine oder mehrere Ansaugöffnungen zur jeweiligen Entnahme einer Fluid-, insbesondere einer Luftprobe, in einen oder mehrere Überwachungsbereiche mündet. Mehrere Überwachungsbereiche können zum Beispiel in unterschiedlichen Bereichen desselben Raums, wie einer (großen) Lagerhalle angeordnet sein, aber auch in jeweiligen Räumen eines Gebäudes oder Abschnitten eines Fahrzeugs, wie den Fahrgastkabinen eines Schiffes. Die entnommenen Fluidproben werden entlang der Rohr- und/oder Schlauchleitung, einem Strömungspfad folgend, zur Partikeldetektionseinheit geführt und durch deren Detektionsbereich geleitet. Die Detektionskammer ist bei diesem Anwendungsfall mit einem definierten Strömungseinlass und einem definierten Strömungsauslass ausgebildet.

Ein derartiges Ansaugpartikelerkennungssystem ist aus der EP 3 584 774 A1 bekannt. Darin ist eine als Streulichtdetektor ausgebildete Partikeldetektionseinheit offenbart, deren Gehäuse bzw. Prüfbereichsumwandung einen Prüfbereich begrenzt und von Umgebungslicht abschirmt. Der Prüfbereich weist einen Strömungseinlass sowie einen Strömungsauslass auf. An den Strömungseinlass ist das Rohr- und/oder Schlauchsystem des Ansaugpartikelerkennungssystems angeschlossen, sodass aus einem (oder mehreren) Überwachungsbereich(en) angesaugte Rauchpartikel in den Prüfbereich transportiert werden. Im Prüfbereich sollen die Rauchpartikel dann mittels Streulichtdetektion erfasst werden, wobei von einem Lichtsender gesendete und an den Rauchpartikeln gestreute Lichtstrahlen von einem Lichtempfänger erfasst werden. Hierzu sind eine Leuchtdiode oder LED (**L**ight **E**mitting **D**iode) und eine Photodiode auf einer Leiterplatte montiert. Es wird vorgeschlagen, die Leuchtdiode und die Photodiode als sogenannte oberflächenmontierte Bauteile (SMD = Surface Mount Device) unmittelbar bzw. direkt mit der Vorderseite der Leiterplatte zu verbinden. Dies hat zur Folge, dass die Ausstrahlrichtung der Leuchtdiode und das Sichtfeld bzw. der Einfallsbereich der Photodiode jeweils orthogonal von der Leiterplatte wegweisen und folglich zueinander parallel verlaufen. Zum Schutz der elektrischen und aktiven, d. h. stromführenden optischen Komponenten ist die Leiterplatte außerdem außerhalb des Prüfbereichs angeordnet. Um dennoch einen Detektions- bzw. Überschneidungsbereich im Prüfbereich zu schaffen, innerhalb dessen sich die von der Leuchtdiode gesendeten Lichtstrahlen und der Einfallsbereich der Photodiode überlagern, sollen Lichtwellenleiter, bspw. optische Fasern als passive optische Komponenten verwendet werden. Die von der Leuchtdiode gesendeten Lichtstrahlen werden mittels des Lichtwellenleiters in den Prüfbereich geführt und derart umgelenkt, dass sich der erforderliche Detektionsbereich ergibt. In einen Lichtwellenleiter eintretende Lichtstrahlen werden in dessen Innerem geführt, weshalb Lichtwellenleiter auch als Lichtleitkabel bezeichnet werden. Indem die Lichtwellenleiter in die gewünschte Richtung gebogen werden, können die darin geführten Lichtstrahlen beliebig umgelenkt werden. Nachteilig ist bei der Verwendung von Lichtwellenleitern, dass eine präzise Ausrichtung der Lichtstrahlen zur Definition des Detektionsbereichs, gerade bei der Montage nicht einfach zu realisieren ist und durch geschultes Fachpersonal durchgeführt werden muss.

Ein anderer bekannter Anwendungsfall, bei dem Partikeldetektionseinheiten zur Branderkennung eingesetzt werden, sind sogenannte Deckenrauchmelder, auch punktförmige Rauchmelder genannt. Anders als bei Ansaugpartikelerkennungssystemen werden Deckenrauchmelder unmittelbar im Überwachungsbereich, also bspw. an der Zimmerdecke eines Raums eines Gebäudes montiert.

Eine kompakte Bauweise eines Deckenrauchmelders, der ebenfalls nach dem Streulichtprinzip arbeitet, ist z.B. aus der US Patentschrift US 5,138,302 bekannt. Der Deckenrauchmelder umfasst als wesentliche Komponenten ein zylindrisches Gehäuse, bestehend aus einem Boden und einem darauf passenden Deckel. Das sogenannte Labyrinth schirmt die im Inneren des Gehäuses ausgebildete Detektionskammer von Umgebungslicht ab, ermöglicht aber einen passiven Austausch mit der Umgebungsluft des Überwachungsbereichs. Eine Leiterplatte, die mit einem Lichtsender und einem Lichtempfänger verbunden ist, ist hier ebenfalls im Inneren des Gehäuses angeordnet. Der Lichtsender ist dabei so montiert, dass dessen Ausstrahlrichtung schräg zur Leiterplatte verläuft und direkt auf die sogenannte Rauchüberwachungszone gerichtet ist. Der Lichtempfänger hingegen ist auch hier unmittelbar mit der Leiterplatte verbunden, wodurch dessen Einfallsbereich orthogonal von der Leiterplatte weg weist. Um eine Überlagerung des Einfallsbereichs des Lichtempfängers mit den Lichtstrahlen des Lichtsenders zu realisieren, wird ein Prisma zur Reflexion von an Rauchpartikeln innerhalb der Rauchüberwachungszone gestreuten Lichtstrahlen in Richtung des Lichtempfängers verwendet. Eine in das Prisma integrierte Linse soll die reflektierten Lichtstrahlen auf den Lichtempfänger fokussieren.

Anders als bei der Verwendung von Lichtwellenleitern werden in das Innere des Prismas eintretende Lichtstrahlen an einer (inneren) Reflexionsfläche einmalig, reflektiert. Das an der innenliegenden Reflexionsfläche reflektierte Licht tritt dabei durch je eine Prismenfläche ein bzw. aus. Eine beliebige Umlenkung der Lichtstrahlen ist bei der Reflexion nicht möglich, der Einfallswinkel, in dem die Lichtstrahlen auf die spiegelartige Reflexionsfläche auftreffen, ist stets identisch mit dem Ausfalls- oder Reflexionswinkel.

Ein anderer Deckenrauchmelder ist aus dem Patent GB 2 404 731 B bekannt. Dieser umfasst ein Gehäuse mit einem Boden und einem Deckel sowie eine Leiterplatte und auf der Leiterplatte montierte Komponenten. Die Leiterplatte ist zwischen dem Boden und dem Deckel des Gehäuses, also wiederum innerhalb der Detektionskammer angeordnet. Der Lichtempfänger und eine als Lichtsender fungierende LED sind hier beide direkt bzw. unmittelbar mit der Leiterplatte verbunden, weshalb deren Einfallsbereich bzw. Ausstrahlrichtung auch wieder jeweils orthogonal zur Leiterplatte verlaufen. Eine Um lenkung der von der LED gesendeten Lichtstrahlen in den Einfallsbereich des Lichtempfängers, hier um 90°, soll abermals mittels eines Prismas realisiert werden. Dafür ist ein zweiteiliger, eine Trägerbasis und einen Trägerdeckel umfassender Prismenträger mittels Clips, in komplementäre Öffnungen der Leiterplatte eingeschnappt. Das Prisma selbst ist in die Trägerbasis eingesetzt und wird durch den Trägerdeckel, der hierzu mit der Trägerbasis verbunden wird, gehalten. Der Lichtempfänger "blickt" durch eine Öffnung des Prismenträgers auf die von der LED gesendeten und an der Reflexionsfläche des Prismas reflektierten Lichtstrahlen.

Bei den im Stand der Technik offenbarten Deckenrauchmeldern sind Montage, Wartung und Reparatur aufgrund der unterschiedlichen optischen Bauteile, der erforderlichen präzisen Ausrichtung dieser Bauteile zueinander und der insgesamt hohen Anzahl an unterschiedlichen Einzelteilen vergleichsweise aufwendig. Darüber hinaus befinden sich elektrische und aktive optische Komponenten, wie die Leiterplatte, der Lichtsender oder Lichtempfänger unmittelbar innerhalb in der Detektionskammer.

Aus der Offenlegungsschrift US 2018/0306715 A1 ist ein in sich geschlossener Photosensor zur Erkennung von Rauch offenbart. Der Photosensor umfasst einen Lichtsender, bspw. eine Leuchtdiode oder Laserdiode, einen als Photodiode mit Phototransistor realisierten Lichtempfänger, und ein Gehäuse mit einem Lichtaustritts-Tunnel sowie einem Lichteintritts-Tunnel. Der Lichtsender und der Lichtempfänger sind an den entsprechenden Gehäuseseiten jeweils mit einer eigenen Leiterplatte als oberflächenmontiertes Bauteil verbunden, sodass deren jeweilige optische Achsen, d. h. die Ausstrahlrichtung bzw. Richtung des Einfallsbereichs, orthogonal zu der jeweiligen Leiterplatte und parallel zueinander verlaufen. Zur Definition eines Rauchüberwachungsbereich, innerhalb dessen sich die von dem Lichtsender gesendeten Lichtstrahlen und der Einfallsbereich des Lichtempfängers überlagern, sollen in diesem Fall nicht nur eines, sondern gleich zwei optische Prismen verwendet werden. Die Prismen sind mit jeweils einer Prismenfläche zum Lichtsender bzw. Lichtempfänger hin ausgerichtet. An einer anderen Prismenfläche ist jeweils eine, auf den Rauchüberwachungsbereich ausgerichtete Linse angeordnet. Auf der Lichtsenderseite ist das Prisma also mit der Lichteintrittsfläche zum Lichtsender hin ausgerichtet, die an der Lichtaustrittsfläche angeordnete Linse dient der Bündelung der vom Lichtsender gesendeten und an der Reflexionsfläche reflektierten Lichtstrahlen.

In physikalischer Betrachtung entspricht das von einer Lichtquelle ausgesendete Licht einer Vielzahl einzelner Lichtstrahlen, die bspw. mittels einer Linse entlang einer Rotations- oder Symmetrieachse, auch als optische Achse bezeichnet gebündelt werden können. Das entlang der optischen Achse gebündelte Licht definiert einen Lichtpfad und ist vergleichbar mit dem Lichtkegel einer Taschenlampe. Im Sinne dieser Erfindung wird unter dem Begriff "Lichtpfad" daher derjenige Raum oder Bereich verstanden, den die Gesamtheit aller von einer einzelnen Lichtquelle ausgesendeten Lichtstrahlen beansprucht. Der Lichtpfad einer Lichtquelle wird also durch das von der Lichtquelle ausgesendete Licht, und zwar unabhängig vom tatsächlichen Betriebszustand der Lichtquelle, definiert. Anders ausgedrückt ist der Lichtpfad auch vorhanden, sofern die Lichtquelle ausgeschaltet ist, d. h. kein Licht aussendet.

Gemäß der US 2018/0306715 A1 soll die jeweils einzige Linse der dort offenbarten optischen Prismen einen derartigen Lichtpfad entlang des Lichtaustritts- bzw. Lichteintritts-Tunnels im Gehäuse definieren, um durch Überlagerung der Lichtpfade den Rauchüberwachungsbereich zu schaffen.

Damit auch die Ausrichtung des Lichtsenders und des Lichtempfängers auf die jeweilige Reflexionsfläche der Prismen möglichst präzise ist, wird vorgeschlagen, die Prismen aus transparentem Harz, den Lichtsender bzw. Lichtempfänger umschließend direkt auf die Leiterplatte aufzugießen. Nachteilig ist dabei der aufwendige Herstellungsprozess und, dass die Prismen von ihren jeweiligen Leiterplatten nicht zerstörungsfrei trennbar sind. Im Falle eines Defekts ist es erforderlich, den vollständigen Photosensor, inkl. Gehäuse, Leiterplatte sowie aller weiteren optischen und elektrischen Komponenten auszutauschen, wodurch hohe Kosten für Wartung und Reparatur verursacht werden.

Es ist die Aufgabe der vorliegenden Erfindung, die Nachteile aus dem Stand der Technik zu überwinden und insbesondere eine kompakte Partikeldetektionseinheit zu schaffen, welche eine einfache und präzise Ausrichtung der optischen Bauteile zueinander, eine fehlerfreie, und auch durch ungeschultes Personal oder automatisiert durchführbare Montage sowie deren kostengünstige Wartung und Herstellung durch möglichst wenige (unterschiedliche) Einzelteile ermöglicht.

Die Aufgabe wird gelöst durch ein optisches Prisma für eine Partikeldetektionseinheit gemäß Anspruch 1, ein Gehäuse mit zwei Prismensitzen gemäß Anspruch 9 und eine Partikeldetektionseinheit gemäß Anspruch 15 mit einem solchen Gehäuse und zwei optischen Prismen.

Ein erfindungsgemäßes optisches Prisma der eingangs näher beschriebenen Art kennzeichnet sich dadurch, dass die erste Prismenfläche eine erste Linse und die zweite Prismenfläche eine zweite Linse aufweist, die einen im Inneren des Prismas verlaufenden, inneren Lichtpfad definierend ausgebildet sind, sodass entweder über die erste Prismenfläche oder über die zweite Prismenfläche in das Innere des Prismas eintretende Lichtstrahlen entlang des inneren Lichtpfads auf die innenliegende Reflexionsfläche ausgerichtet werden. Die erste und die zweite Linse sind ferner einen außerhalb des Prismas verlaufenden äußeren Lichtpfad definierend ausgebildet, sodass entweder über die erste Prismenfläche oder über die zweite Prismenfläche aus dem Inneren des Prismas austretende Lichtstrahlen entlang des äußeren Lichtpfads ausgerichtet werden.

Erfindungsgemäß ist also vorgesehen, sowohl an der ersten als auch an der zweiten Prismenfläche jeweils eine Linse anzuordnen, sodass unabhängig davon, ob Lichtstrahlen über die erste oder über die zweite Prismenfläche in das Innere des optischen Prismas eintreten, diese Lichtstrahlen stets demselben bzw. identisch verlaufenden, inneren Lichtpfad folgen. Von einer Lichtquelle stammende Lichtstrahlen können nämlich grundsätzlich durch optische Mittel, wie bspw. einen Spiegel oder eine Linse entlang entsprechender Lichtpfade umgelenkt bzw. ausgerichtet werden. Die optischen Mittel wirken hierbei in beiden Richtungen des Lichtpfads, sodass der Lichtpfad selbst, im Sinne dieser Erfindung, richtungslos ist. Erst die von einer Lichtquelle ausgesendeten Lichtstrahlen weisen dann eine festgelegte Richtung auf und können dem durch die optischen Mittel definierten Lichtpfad entweder in einer ersten Richtung, d. h. über die erste Prismenfläche eintretend und über die zweite Prismenfläche austretend, oder aber in einer zweiten, entgegengesetzten Richtung, d. h. über die zweite Prismenfläche eintretend und über die erste Prismenfläche austretend, folgen.

Anders als im Stand der Technik weist das erfindungsgemäße optische Prisma folglich nicht nur eine, sondern insgesamt zwei Linsen auf. Durch einen derartigen Aufbau können die erste und die zweite Prismenfläche, im Zusammenwirken mit einer Lichtquelle bzw. einem Lichtempfänger einer Partikeldetektionseinheit, jeweils entweder als Lichteintrittsfläche oder als Lichtaustrittsfläche verwendet werden, wodurch das erfindungsgemäße Prisma sowohl auf der Lichtsenderseite wie auch der Lichtempfängerseite verwendet werden kann. Durch die jeweiligen Linsen werden über die erste oder die zweite Prismenfläche eintretende Lichtstrahlen stets präzise auf die Reflexionsfläche ausgerichtet, und folgen beim Austritt, entweder über die erste oder die zweite Prismenfläche dem durch die dort vorgesehene Linse vorab festgelegten äußeren Lichtpfad.

Das erfindungsgemäße, optische Prisma kann also wahlweise auf der Lichtsenderseite oder der Lichtempfängerseite einer Partikeldetektionseinheit verwendet werden, wodurch die Einbaumöglichkeiten flexibler sind.

Insbesondere können in einer Partikeldetektionseinheit zwei identische oder baugleiche, optische Prismen montiert werden. Dies wiederum hat eine geringeren Anzahl an unterschiedlichen Bauteilen zur Folge, wodurch die beim Einbau möglichen Fehlerquellen reduziert werden.

In der einfachsten Variante ist das optische Prisma dreiseitig, mit zwei sich deckungsgleich gegenüberliegenden (gerades Prisma), dreieckigen Grundflächen sowie einer sich aus drei Rechtecken zusammensetzenden Mantelfläche. Zwei der Rechtecke entsprechen dann der ersten bzw. zweiten Prismenfläche und fungieren als Lichtein- oder Lichtausttrichtsfläche, das dritte Rechteck entspricht der Reflexionsfläche. Darüber hinaus können aber auch andere Prismenformen, mit bspw. vier- oder fünfeckiger usw. Grundfläche in gerader oder schräger Ausführung verwendet werden.

Vorteilhafte Ausführungsformen sind in den Unteransprüchen enthalten und werden nachfolgend näher erläutert.

Demnach können in vorteilhafter Erfindungsvariante die erste Linse und die zweite Linse, den äußeren Lichtpfad definierend, jeweils zur Fokussierung von über die erste Prismenfläche oder über die zweite Prismenfläche aus dem Inneren des Prismas austretenden Lichtstrahlen, in einem jeweiligen, vorab festgelegten Abstand zu der ersten Prismenfläche bzw. zu der zweiten Prismenfläche ausgebildet sein.

Dies kann beispielsweise realisiert werden, indem die erste und die zweite Linse als Sammellinse, insbesondere plankonvex von der ersten bzw. zweiten Prismenfläche nach außen weisen gestaltet ist, wodurch durch die jeweilige Fläche austretende Lichtstrahlen fokussiert und durch die jeweilige Fläche eintretende Lichtstrahlen zueinander parallel ausgerichtet werden. Die Brennweite f einer plankonvexen Linse entspricht dem Abstand zwischen der ersten bzw. zweiten Prismenfläche und dem Brennpunkt, also demjenigen Punkt, an dem die austretenden Lichtstrahlen fokussiert werden. Durch die Krümmung bzw. asphärische Parameter der Linse können optische Parameter, wie Öffnungsweite bzw. Apertur oder Brennweite f festgelegt werden, wodurch einerseits eine höhere Anzahl an Lichtstrahlen in den Einfallsbereich eintreten und andererseits der Abstand, in dem austretende Lichtstrahlen fokussiert werden, beliebig veränderbar ist. Die eintretenden Lichtstrahlen folgen hingegen jeweils einem im wesentlichen parallelen Verlauf, unabhängig von der Krümmung bzw. den Parametern der Linse. Auf diese Weise können die äußeren Lichtpfade bedarfsweise variiert werden, ohne die inneren Lichtpfade zu verändern. Darüber hinaus weisen asphärischen Linsen einen flachere Bauform auf, wodurch der optische Messaufbau verkleinert ist und folglich mehr Raum zur Durchführung optischer Messungen, insbesondere für die Partikeldetektion verbleibt.

Grundsätzlich ist es denkbar, die innenliegende Reflexionsfläche zu verspiegeln, indem bspw. deren gegenüberliegend angeordnete und nach außen weisende Außenfläche mit einem geeigneten (metallischen) Material beschichtet wird. Vorzugsweise erfolgt die Reflexion von im Prismainneren verlaufenden Lichtstrahlen, gemäß beispielhafter Erfindungsgestaltung, an der innenliegenden Reflexionsfläche jedoch durch Totalreflexion, d. h. die Lichtstrahlen werden am Übergang vom optisch dichteren Medium (Brechungsindex n1) zum optisch weniger dichten Medium (Brechungsindex n₂) vollständig reflektiert. Eine solche vollständige Reflexion wird auch als innere Totalreflexion (TIR = Total Internal Reflexion) bezeichnet. Hierzu sind, nach einer beispielhaften Ausführungsform der Erfindung, die erste Linse und die zweite Linse, den inneren Lichtpfad definierend, jeweils derart ausgebildet, dass entweder über die erste Prismenfläche oder über die zweite Prismenfläche in das Innere des Prismas eintretende Lichtstrahlen zueinander parallel verlaufend auf die innenliegende Reflektionsfläche ausgerichtet sind. Die Lichtstrahlen schließen hierbei einen festgelegten Winkel mit einer Lotgeraden der innenliegenden Reflexionsfläche ein. Dieser Winkel, auch als Grenzwinkel bezeichnet, wird unter Berücksichtigung des Brechungsindex n des Materials, aus welchem das Prisma hergestellt ist, festgelegt, sodass die optischen Voraussetzungen für eine Totalreflexion, ohne jegliche Beschichtung, an der innenliegenden Reflexionsfläche erfüllt sind.

Eine mögliche Option wäre, das optische Prisma aus einem spritzgussfähigen Polymer, wie TOPAS^{®} COC Polymer, mit einem Brechungsindex von etwa n₁ = 1,56 herzustellen. Das angrenzende Medium, also die Umgebungsluft weist einen Brechungsindex von etwa n₂ = 1,0 auf. Totalreflexion an der inneren Reflexionsfläche des Prismas ließe sich dann bspw. ab einem Grenzwinkel von ungefähr 45° zuverlässig erzielen. Bei Verwendung von Materialien mit höherem Brechungsindex n tritt Totalreflexion auch bereits bei kleineren Grenzwinkeln, unterhalb von 45° auf.

Gemäß der beispielhaften Ausführungsform werden Brechungsindex n des Prismenmaterials und Grenzwinkel also derart aufeinander abgestimmt, dass die auf die innenliegende Reflexionsfläche auftreffenden Lichtstrahlen vollständig reflektiert werden. Dadurch dass die Reflexion an einer innenliegenden Reflexionsfläche des Prismas erfolgt, ist die Reflexionsfläche außerdem vor etwaigen, auf die optischen Eigenschaften Einfluss nehmenden Verschmutzungen geschützt.

Die jeweiligen Flächen des Prismas müssen nicht unbedingt eben verlaufen. Insbesondere kann es für die Reflexionsfläche vorteilhaft sein, diese konvex auszugestalten oder mit einer Wölbung zu versehen, um die reflektierenden Eigenschaften zu verbessern und/oder zusätzlich den Verlauf des innenliegenden Lichtpfads zu beeinflussen.

Um bei Wartungsarbeiten oder während der Montage eine präzise Positionierung des Prismas im Gehäuse einer Partikeldetektionseinheit sicherzustellen, ist nach einem Erfindungsbeispiel, die erste Prismenfläche mit Abstandshaltern zur insbesondere formschlüssigen Kopplung mit einem komplementären Ausrichtmittel einer Partikeldetektionseinheit, insbesondere eines Prismensitzes eines Gehäuses der Partikeldetektionseinheit versehen. Vorzugsweise sind die Abstandshalter in der Art von Steckmitteln gestaltet und einstückig mit dem Prisma verbunden. Die komplementären Ausrichtmittel des Prismensitzes können dann in der Form von Ausnehmungen umgesetzt sein, wodurch Prisma und Gehäuse, bzw. dessen Prismensitz, in der Art von "Stecker" und "Steckdose" zusammenwirken. Die Abstandshalter sind dabei so ausgebildet, dass deren Länge einem vorab festlegbaren Abstand zu der ersten Prismenfläche entspricht. Durch die Abstandshalter kann das Prisma in einem der Prismensitze des Gehäuses einer Partikeldetektionseinheit selbstausrichtend aufgenommen werden, ohne dass die an der ersten Prismenfläche angeordnete erste Linse mit dem Prismensitz in Berührung gelangt, zwischen Prismensitz und erster Linse wird der durch die Abstandshalter festgelegte Abstand eingehalten. Insgesamt wird durch die Abstandshalter die Handhabbarkeit der optischen Prismen während des Montagevorgangs, insbesondere beim Einsetzen in jeweilige Prismensitze einer Partikeldetektionseinheit erheblich verbessert.

In vorteilhafter Weiterbildung dieses Erfindungsbeispiels ist die Länge der Abstandshalter gleich oder kleiner der Brennweite f der ersten Linse. Im Zusammenwirken mit der Partikeldetektionseinheit wird hierdurch nämlich sichergestellt, dass sofern sich das Prisma in einem der Prismensitze befindet, der Brennpunkt der ersten Linse auf oder hinter dem Lichtsender, insbesondere einer LED bzw. auf oder hinter dem Lichtempfänger, insbesondere einer Photodiode der Partikeldetektionseinheit liegt.

Dabei kann es besonders zweckmäßig sein, dass die Abstandshalter, gemäß beispielhafter Weiterbildung des Erfindungsbeispiels, außerhalb der durch die erste und die zweite Linse definierten Lichtpfade liegend mit der ersten Prismenfläche verbunden sind.

Beispielsweise könnten die erste und die zweite Prismenfläche jeweils die Geometrie eines Quadrats und die Linse eine kreisförmige Grundfläche aufweisen, die in die quadratische Prismenfläche einbeschrieben ist. Die Abstandshalter können dann in den vier Ecken der quadratischen Prismenfläche, außerhalb der Linse und folglich auch außerhalb der die Lichtpfade definierenden optisch relevanten Bereiche angeordnet sein. Besonders einfach und kostengünstig kann das vollständige Prisma, inklusive der beiden Linsen und den Abstandshaltern einstückig, aus einem spritzgussfähigen Material, bspw. mittels Spriztgussverfahren (Injection Molding) hergestellt sein. Ferner kann durch die einstückige Ausführung die Anzahl der Grenzflächen des Prismas, die von den entlang der Lichtpfade verlaufenden Lichtstrahlen passiert werden müssen, reduziert werden. Beispielsweise wird so eine Grenzfläche zwischen Linse und Prismenfläche vermieden, wodurch eine hochpräzise Ausrichtung der optischen Bauteile, wie der ersten und zweiten Linse, der beiden Prismenflächen sowie der innenliegenden Reflexionsfläche zueinander direkt beim Herstellungsprozess erreicht wird. Darüber hinaus sinkt mit der Reduzierung der Grenzflächen auch die Anfälligkeit gegenüber Verschmutzungen, da insgesamt weniger Flächen vorhanden sind, an denen sich Verschmutzungen, bspw. in Form von Rauchpartikeln ablagern könnten.

Damit die optischen Eigenschaften des Prismas von der Fertigungsqualität der Kanten unabhängig sind, sieht ein vorteilhaftes Ausführungsbeispiel der Erfindung vor, dass die erste Linse und die zweite Linse, den inneren Lichtpfad definierend, jeweils derart ausgebildet sind, dass entweder über die erste Prismenfläche oder über die zweite Prismenfläche in das Innere des Prismas eintretende Lichtstrahlen auf einen inneren Teilbereich der innenliegenden Reflexionsfläche auftreffend ausgerichtet werden. Die entlang der inneren Lichtpfade verlaufenden Lichtstrahlen werden mittels der Linsen also lediglich auf den inneren, insbesondere kreisförmigen Teilbereich der Reflexionsfläche ausgerichtet, wodurch deren optisch relevanter Bereich reduziert wird. Der den inneren Teilbereich umgebende, äußere Teilbereich der Reflexionsfläche ist für die Reflexion auftreffender Lichtstrahlen dann nicht relevant, und kann daher für andere Zwecke, bspw. zur Befestigung oder Ausrichtung des Prismas innerhalb eines Prismensitzes des Gehäuses einer Partikeldetektionseinheit verwendet werden.

So ist nach einer anderen, optionalen Erfindungsvariante denkbar, dass das Prisma auf der der innenliegenden Reflexionsfläche gegenüberliegenden und nach außen weisenden Außenfläche einen oder mehrere Anlagebereiche aufweist, die zur Ausrichtung der Reflexionsfläche anhand eines komplementären Ausrichtmittels eines Prismensitzes eines Gehäuses für eine Partikeldetektionseinheit geeignet, und außerhalb der durch die erste Linse und die zweite Linse definierten Lichtpfade liegend angeordnet sind. Vorzugsweise sind die Anlagebereiche im Verhältnis zur Reflexionsfläche möglichst klein und liegen außerhalb der optisch relevanten Bereiche der innenliegenden Reflexionsfläche und entsprechen dem zuvor beschriebenen, äußeren Teilbereich.

Die eingangs gestellte Erfindungsaufgabe wird auch durch ein Gehäuse für eine Partikeldetektionseinheit mit einer Oberschale und einer Unterschale, die zur Begrenzung einer innerhalb des Gehäuses angeordneten und von Umgebungslicht abgeschirmten Detektionskammer miteinander verbindbar sind, gelöst.

Erfindungsgemäß bilden die Oberschale und die Unterschale gemeinsam zwei Prismensitze, die zur zueinander ausgerichteten Aufnahme jeweils eines optischen Prismas, insbesondere nach einer der zuvor beschriebenen Erfindungsvarianten geeignet sind. Die Prismen werden durch Aufnahme in den Prismensitzen so zueinander ausgerichtet, dass außerhalb der Prismen verlaufende Lichtpfade, die durch an einer jeweiligen innenliegenden Reflexionsfläche des Prismas reflektierte Lichtstrahlen definiert sind, einen Detektionsbereich innerhalb der Detektionskammer definierend einander überlagern.

Die Ober- und die Unterschale sind vorzugsweise jeweils einstückig ausgebildet, sodass das Gehäuse insgesamt aus lediglich diesen zwei Bauteilen, der Oberschale und der Unterschale besteht. Die Verbindung zwischen Ober- und Unterschale kann beispielsweise durch formschlüssiges Ineinanderstecken oder -clipsen, aber auch durch Klebeverbindungen realisiert werden. Im verbundenen Zustand bilden Ober- und Unterschale gemeinsam die zwei Prismensitze, die jeweils zur Aufnahme und zum Ausrichten eines optischen Prismas vorgesehen sind.

Nach einer vorteilhaften Ausführungsform des Gehäuses weisen die Prismensitze jeweils mindestens ein Ausrichtmittel auf, welches zur selbstausrichtenden Aufnahme des darin angeordneten Prismas außerhalb der Lichtpfade angeordnet ist. Die Prismensitze sind in ihrer Geometrie derart symmetrisch konstruiert, dass von beiden Prismensitzen jeweils ein identisches, baugleiches optisches Prisma aufgenommen werden kann. Um den für die Partikeldetektion erforderlichen Detektionsbereich zu definieren, müssen die beiden Prismen, insbesondere deren innenliegende Reflexionsflächen exakt zueinander ausgerichtet werden. Die Ausrichtmittel stellen sicher, dass das jeweilige Prisma ausschließlich in einer einzigen, nämlich der hierzu erforderlichen Position von dem Prismensitz aufgenommen werden kann, wodurch der Einbau in einer falschen Stellung oder Position ausgeschlossen wird. Um die optischen Eigenschaften des Prismas nicht zu beeinflussen, ist es vorteilhaft, dass die Ausrichtmittel außerhalb der Lichtpfade liegend angeordnet sind.

Dabei kann nach einer beispielhaften Erfindungsvariante ein erstes Ausrichtmittel des Prismensitzes als Führungsdurchlässe gebildet sein, die zur Aufnahme und Führung von komplementären und mit einer ersten Prismenfläche des Prismas verbunden Abstandshaltern, insbesondere Steckmitteln außerhalb der Lichtpfade angeordnet sind. Um das Prisma in einen Prismensitz einzusetzen, werden die am Prisma angeordneten Abstandshalter in eine die Führungsdurchlässe des Prismensitzes durchsetzende Position geschoben, wodurch die Positionierung und die Ausrichtung der jeweiligen Prismen in Bezug auf das Gehäuse, insbesondere die Detektionskammer und auch zueinander festgelegt werden.

Nach einer anderen beispielhaften Erfindungsvariante weist ein zweites Ausrichtmittel eines Prismensitzes eine Ausrichtfläche mit einem oder mehreren, außerhalb der Lichtpfade liegenden und an der Ausrichtfläche angeordneten Anlagepunkten auf. Indem die der Reflexionsfläche gegenüberliegende und nach außen weisende Außenfläche des Prismas mittels komplementärer Anlagebereiche an dem einen oder den mehreren Anlagepunkten anliegt, kann die innenliegende Reflexionsfläche des Prismas parallel und gleichzeitig beabstandet zur Ausrichtfläche des Prismensitzes ausgerichtet werden. Die Ausrichtung der Ausrichtfläche, insbesondere deren Schrägstellung, entspricht der Ausrichtung der innenliegenden Reflexionsfläche, die zur Ausbildung des Detektionsbereichs innerhalb der Detektionskammer des Gehäuses erforderlich ist. Die Anlagepunkte sind außerhalb der Lichtpfade angeordnet und verhindern, dass die nach außen weisende Außenfläche mit dem Prismensitz bzw. mit dessen Ausrichtfläche direkt in Berührung gelangt, wodurch eine Beeinträchtigung der optischen Eigenschaften des Prismas vermieden wird.

Für die Verwendung in einem Ansaugpartikelerkennungssystem können nach einer optionalen Ausführungsform die Oberschale und die Unterschale gemeinsam einen Strömungskanal mit einem Strömungseinlass und einem Strömungsauslass zur Ausbildung eines durch die Detektionskammer verlaufenden Strömungspfads bilden, wobei der Strömungskanal und die Prismensitze derart zueinander ausgerichtet sind, dass der Strömungspfad den Detektionsbereich durchquerend ausgebildet ist.

In vorteilhafter Weiterbildung umfasst der Strömungskanal ein Strömungsmittel, das zur Umlenkung einer entlang des Strömungspfads verlaufenden Fluidströmung innerhalb der Detektionskammer angeordnet ist. Das Strömungsmittel ist so ausgebildet, dass die am Strömungseinlass eintretende Fluidprobe, insbesondere Umgebungsluft, die auf das Vorhandensein von Partikeln, insbesondere Rauchpartikeln hin untersucht werden soll, zwar den Detektionsbereich durchströmt, jedoch an den Prismensitzen und den darin befindlichen Prismen vorbeigeleitet, ohne dabei die von den innenliegenden Reflexionsflächen ausgehend definierten Lichtpfade zu unterbrechen. Als geeignetes Strömungsmittel hat sich beispielsweise ein einstückig mit dem Gehäuse verbundenes Strömungsumlenkbauteil mit einem trapezförmigen oder U-förmigen Profil erwiesen. Ein damit synergetischer Effekt kann erzielt werden, indem die Brennweite f der der Detektionskammer zugewandten zweiten Linsen größer als die Brennweite f der dem Lichtempfänger bzw. dem Lichtsender zugewandten ersten Linsen ist. Hierdurch ist einerseits eine kompakte Bauweise realisierbar, gleichzeitig wird ein Schutz vor Verschmutzungen erzielt, indem der Abstand der optischen Prismen zur fluiddurchströmten Detektionskammer erhöht ist

Schließlich wird die eingangs gestellte Erfindungsaufgabe auch durch eine Partikeldetektionseinheit gelöst. Die Partikeldetektionseinheit umfasst ein erstes optisches Prisma, ein insbesondere identisches bzw. baugleiches, zweites optisches Prisma und ein Gehäuse, insbesondere jeweils nach einer der zuvor beschriebenen Ausführungsformen. Das Gehäuse begrenzt eine darin angeordnete und von Umgebungslicht abgeschirmte Detektionskammer und weist einen ersten Prismensitz sowie einen zweiten Prismensitz auf, wobei ein erstes Prisma innerhalb des ersten Prismensitzes und ein zweites Prisma innerhalb des zweiten Prismensitzes angeordnet ist und die Prismen zueinander ausgerichtet sind. Ferner umfasst die Partikeldetektionseinheit eine Leiterplatte, einen Lichtsender zum Aussenden von Lichtstrahlen in einer Ausstrahlrichtung und einen Lichtempfänger zum Empfangen von in einem Einfallsbereich des Lichtempfängers einfallenden Lichtstrahlen.

Erfindungsgemäß sind der Lichtsender mit dem ersten Prismensitz und der Lichtempfänger mit dem zweiten Prismensitz zusammenwirkend auf derselben Leiterplatte positioniert. Vom Lichtsender in Ausstrahlrichtung gesendete Lichtstrahlen treffen dann auf die innenliegende Reflexionsfläche des ersten Prismas auf, und passieren dabei eine erste Prismenfläche des durch den ersten Prismensitz ausgerichteten ersten Prismas. Der Einfallsbereich des Lichtempfängers ist entsprechend auf die innenliegende Reflexionsfläche des zweiten Prismas gerichtet, und passiert dabei eine erste Prismenfläche des durch den zweiten Prismensitz ausgerichteten zweiten Prismas.

Die Position und Ausrichtung des Lichtsenders sowie des Lichtempfängers auf deren gemeinsamer Leiterplatte sind hierzu an die durch die Prismensitze vorgegebene Position der beiden Prismen angepasst, sodass insbesondere der Abstand zwischen Lichtsender und Lichtempfänger dem Abstand zwischen den beiden Prismensitzen und folglich den beiden optischen Prismen entspricht. Der Lichtsender, bspw. eine oder mehrere Leuchtdioden (LED) und der Lichtempfänger, bspw. eine oder mehrere Photodioden (PD) sind nach einer vorteilhaften Ausführungsform als sogenanntes SMD-Bauteil (Surface Mount Device) jeweils direkt bzw. unmittelbar mit der Leiterplatte, insbesondere deren dem Gehäuse zugewandten Vorderseite verbunden und bspw. mittig der jeweils ersten Linse des entsprechenden Prismas gegenüberliegend angeordnet.

Bei einer beispielhaften Ausführungsform der Partikeldetektionseinheit weisen die erste Prismenfläche des ersten Prismas und die erste Prismenfläche des zweiten Prismas jeweilige Abstandshalter, insbesondere Steckmittel auf. Die Abstandshalter greifen in komplementäre und als Montageöffnungen realisierte dritte Ausrichtmittel der Leiterplatte formschlüssig ein oder stützen sich an der der Vorderseite der Leiterplatte ab, wodurch ein vorab festgelegter Abstand zwischen der ersten Prismenfläche und dem Lichtsender bzw. dem Lichtempfänger definiert wird. Durch den Eingriff der Abstandshalter in die komplementären Ausrichtmittel der Leiterplatte wird einerseits sichergestellt, dass die Leiterplatte, das Gehäuse und die beiden Prismen der Partikeldetektionseinheit korrekt zueinander ausgerichtet sind, insbesondere sollen der Lichtsender und der Lichtempfänger mittig der jeweils ersten Linse eines Prismas gegenüberliegend angeordnet sein. Andererseits wird aber auch sichergestellt, dass der gewünschte Abstand, zwischen den jeweiligen ersten Linsen bzw. Prismenflächen und dem Lichtsender bzw. Lichtempfänger eingehalten wird. Vorzugsweise ist der Abstand kleiner oder entspricht der Brennweite f der ersten Linse.

Um empfindliche elektrische Komponenten zu schützen, ist es nach einer weiterbildenden Erfindungsvariante vorteilhaft, dass die Leiterplatte außerhalb des Gehäuses angeordnet und mit dem Gehäuse verbunden ist. Die zuvor beschriebenen Abstandshalter eines Prismas durchsetzen hierzu komplementäre, und als Führungsdurchlässe realisierte erste Ausrichtmittel des jeweiligen Prismensitzes und sind in den als Montageöffnungen realisierten, dritten Ausrichtmitteln der Leiterplatte fixiert oder stützen sich an dieser ab.

Vorzugsweise umfasst die Partikeldetektionseinheit ein signalübertragend mit dem Lichtsender und dem Lichtempfänger verbundenes Steuerungsmodul, das eine Speichereinheit zur Hinterlegung einer Programmierung für die Ansteuerung des Lichtsenders und des Lichtempfängers sowie für die Auswertung von Signalen, die auf von dem Lichtempfänger erfassten Lichtstrahlen basieren, aufweist.

Schließlich kann die Partikeldetektionseinheit optional auch einen Bestandteil eines Ansaugpartikelerkennungssystems darstellen, wobei dann ein Strömungseinlass des Gehäuses fluidleitend an eine Rohr- und/oder Schlauchleitung, die über eine oder mehrere Ansaugöffnungen zur jeweiligen Entnahme einer Fluid-, insbesondere einer Luftprobe, in einen oder mehrere Überwachungsbereiche mündet, angeschlossen ist. Die Steuerung der übrigen Komponenten des Ansaugpartikelerkennungssystems und der Partikeldetektionseinheit könnte dann von einem gemeinsamen Steuerungsmodul aus erfolgen, oder alternativ könnten das Steuerungsmodul der Partikeldetektionseinheit und das Steuerungsmodul des Ansaugpartikelerkennungssystems miteinander kommunizieren.

Weitere Einzelheiten, Merkmale, Merkmals(unter)kombinationen, Vorteile und Wirkungen auf Basis der Erfindung ergeben sich aus der nachfolgenden Beschreibung eines bevorzugten Ausführungsbeispiels der Erfindung und den Zeichnungen. Diese zeigen in
- Fig. 1: eine perspektivische Explosionsdarstellung einer beispielhaften Ausführungsform einer erfindungsgemäßen Partikeldetektionseinheit mit einer Leiterplatte, einem Gehäuse und zwei optischen Prismen,
- Fig. 2: eine perspektivische Darstellung der Oberschale und der Unterschale des Gehäuses aus Figur 1, mit den darin befindlichen optischen Prismen,
- Fig. 3: eine perspektivische Einzeldarstellung des ersten und des zweiten optischen Prismas zusammen mit der Leiterplatte aus Figur 1,
- Fig. 4: eine schematische Darstellung der durch zwei optische Prismen gemäß einer beispielhaften Erfindungsvariante definierten Lichtpfade,
- Fig. 5: eine perspektivische Darstellung der Oberschale und des ersten optischen Prismas aus Figur 1 und in
- Fig. 6: eine perspektivische Darstellung der Unterschale und des ersten optischen Prismas aus Figur 1.

Die Figuren sind lediglich beispielhafter Natur und dienen nur dem Verständnis der Erfindung. Die gleichen Elemente sind mit denselben Bezugszeichen versehen.

Die nachfolgenden Absätze beschreiben die Erfindung jeweils am Beispiel einer nach dem Streulichtprinzip arbeitenden Partikeldetektionseinheit für ein Ansaugpartikelerkennungssystem. Selbstverständlich ist die Erfindung nicht auf die beschriebene Verwendung beschränkt, andere denkbare Anwendungsmöglichkeiten wären beispielsweise die Verwendung als Durchlichtdetektor und/oder in einem Deckenrauchmelder.

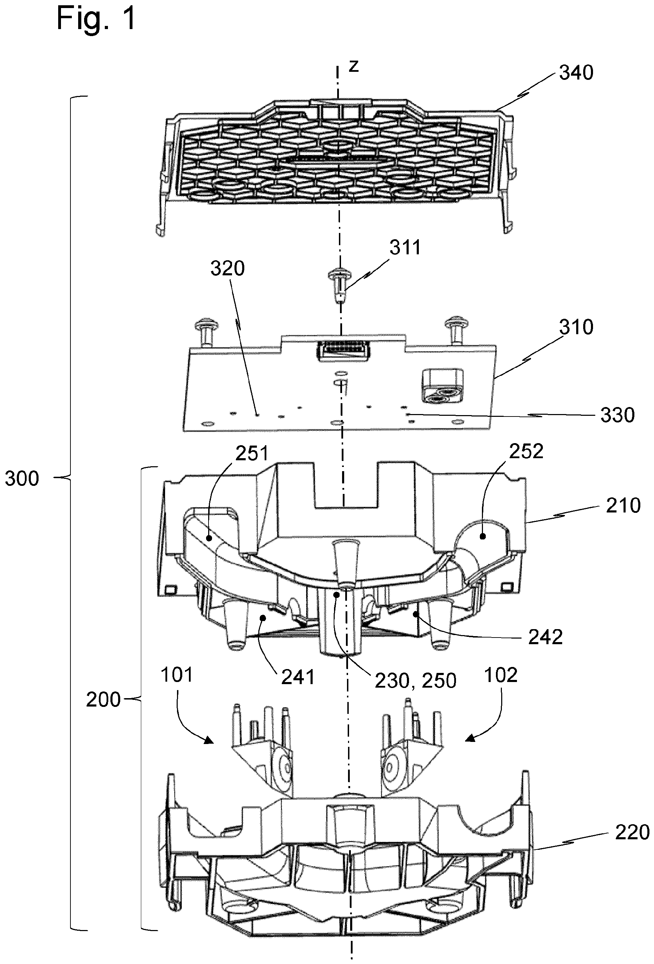

In der Figur 1 ist eine beispielhafte Ausführung einer erfindungsgemäßen Partikeldetektionseinheit 300 mit einem Gehäuse 200, einem ersten optischen Prisma 101, einem zweiten optischen Prisma 102 und einer Leiterplatte 310 in einer perspektivischen Explosionsdarstellung entlang der z-Achse gezeigt. Auf der Leiterplatte 310 sind ein in der Figur 1 nicht dargestellter Lichtsender 320 und ein Lichtempfänger 330 in entsprechenden Montageöffnungen montiert. Beispielsweise kann der Lichtsender 320 eine oder mehrere Leuchtdioden (LED) und der Lichtempfänger 330 eine oder mehrere Photodioden (PD) umfassen, die als sogenannte oberflächenmontierte Bauteile (SMD = Surface Mount Device) unmittelbar bzw. direkt mit der dem Gehäuse 200 zugewandten Vorderseite der Leiterplatte 310 verbunden sind. Die Ausstrahlrichtung des Lichtsenders 320 und der Einfallsbereich des Lichtempfängers 330 weisen dann orthogonal von der Vorderseite der Leiterplatte 310 weg. Die Leiterplatte 310 ist mittels dreier Verbindungselemente 311, insbesondere Schrauben, mit dem Gehäuse 200 verbunden. An der zur Vorderseite der Leiterplatte 310 gegenüberliegend angeordneten Rückseite kann eine optionale Abdeckplatte 340 bspw. über federnde Steckmittel in dazu komplementär angeordnete Ausnehmungen des Gehäuses 200 eingeschnappt werden.

Das Gehäuse 200 umfasst eine Oberschale 210 und eine Unterschale 220, die vorzugsweise jeweils einstückig hergestellt sind, sodass das Gehäuse 200 insgesamt aus lediglich genau zwei Bauteilen besteht. Die Oberschale 210 und die Unterschale 220 sind miteinander verbindbar, wobei eine Detektionskammer 230 sowie ein erster Prismensitz 241 und ein zweiter Prismensitz 242 im Gehäuseinneren gebildet werden. Die Verbindung der Oberschale 210 mit der Unterschale 220 kann über übliche Verbindungselemente wie Schrauben oder ähnliches erfolgen, oder auch mittels einer Klebeverbindung. Das in der Figur 1 gezeigte Ausführungsbeispiel einer Partikeldetektionseinheit 300 ist zur Verwendung in einem Ansaugpartikelerkennungssystem geeignet, weshalb die Oberschale 210 und die Unterschale 220 gemeinsam auch einen Strömungskanal 250 mit zwei, einen dazwischenliegenden Strömungspfad definierenden Ein- bzw. Auslassöffnungen, dem Strömungseinlass 251 und dem Strömungsauslass 252 bilden. Die Prismensitze 241, 242 sind jeweils zur Aufnahme und Ausrichtung des ersten optischen Prismas 101 bzw. des zweiten optischen Prismas 102 vorgesehen. Wie hier dargestellt sind das erste und das zweite Prismas 101, 102 vorzugsweise baugleich bzw. identisch, wodurch die Montage erheblich vereinfacht wird.

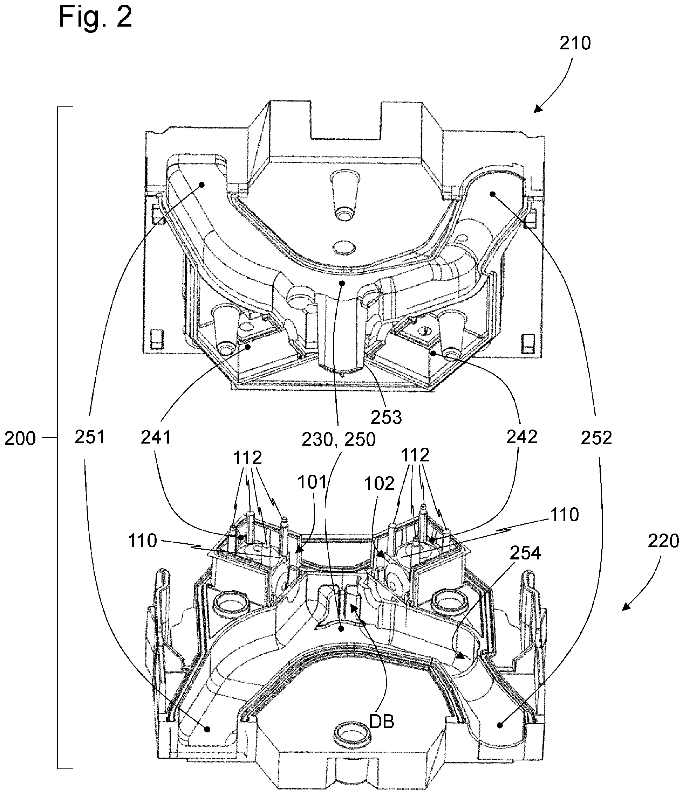

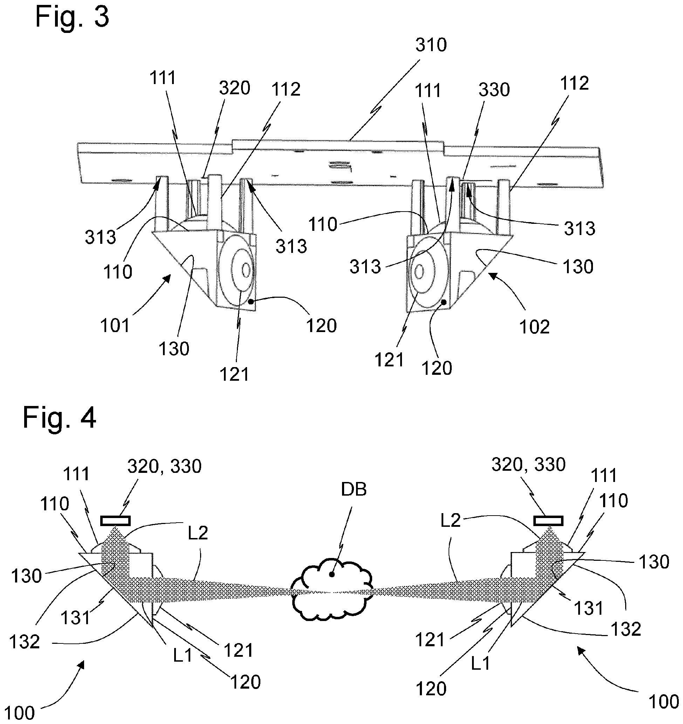

Figur 2 zeigt die Oberschale 210 und die Unterschale 220 des Gehäuses 200 aus der Figur 1 in einer zueinander aufgeklappten Stellung. Das erste optische Prisma 101 und das zweite optische Prisma 102 sind in jeweils einem Prismensitz 241, 242 aufgenommen und so ausgerichtet, dass deren jeweilige äußere Lichtpfade L2 einen Detektionsbereich DB innerhalb der Detektionskammer 230 definierend einander überlagern (s. hierzu auch Figur 4). Die optischen Prismen 101, 102 weisen jeweils mit einer ersten Prismenfläche 110 in Richtung der Oberschale 210 bzw. der Leiterplatte 310 (s. Figur 1). An der ersten Prismenfläche 110 sind außerdem jeweils vier Abstandshalter 112 einstückig ausgebildet. Jeweils zwei der Abstandshalter 112 eines Prismas 101, 102 sind in der Art von Steckmitteln zum formschlüssigen Eingriff in komplementär angeordnete Montageöffnungen der Leiterplatte 310 geformt.

Der Strömungskanal 250, die Detektionskammer 230 und die beiden Prismensitze 241, 242 des Gehäuses 200 sind grundsätzlich bezüglich der z-Achse (s. Figur 1) symmetrisch, sodass der Strömungseinlass 251 und -auslass 252 sowie die Lichtsender- und die Lichtempfängerseite vom Gehäuse 200 und den optischen Prismen 101, 102 selbst zunächst noch nicht festgelegt sind. Erst durch das Anschließen der Rohr- und/oder Schlauchleitung eines Ansaugpartikelerkennungssystems an eine der beiden Ein- bzw. Auslassöffnungen des Strömungskanals 250, wird diese als Strömungseinlass 251 definiert. Der in Richtung der Fluidströmung dann stromaufwärts liegende, erste Prismensitz 241 kann wahlweise dem Lichtsender 320 oder dem Lichtempfänger 330 und der in Richtung der Fluidströmung stromabwärts liegende, zweite Prismensitz 242 entsprechend umgekehrt dem Lichtempfänger 330 oder dem Lichtsender 320 zugeordnet werden, indem der mit der Leiterplatte 310 verbundene Lichtsender 320 bzw. Lichtempfänger 330 zu dem jeweiligen Prismensitz 241, 242 gegenüberliegend angeordnet wird (s. hierzu auch Figur 1).

Abweichend davon ist in der vorliegenden, optionalen Ausführungsform der Strömungskanal 250 beispielhaft mit einem vordefinierten Strömungseinlass 251 und einem vordefinierten Strömungsauslass 252 versehen, wobei der dazwischenliegende Strömungspfad durch die Detektionskammer 230 und den Detektionsbereich DB führt. Der in Richtung der Fluidströmung stromaufwärts liegende, erste Prismensitz 241 ist dem Lichtsender 320 zugeordnet und der in Richtung der Fluidströmung stromabwärts liegende, zweite Prismensitz 242 dem Lichtempfänger 330 (s. Figur 1). Innerhalb des Strömungskanals 250 und im Bereich der Detektionskammer 230 ist ein Strömungsmittel 253 in der Art eines ein U-Profil aufweisenden Strömungsumlenkbauteils angeordnet, welches dafür sorgt, dass in der Fluidströmung transportierte Partikel, insbesondere Schmutz- oder Staubpartikel bzw. im Brandfall auch Rauchpartikel derart umgelenkt werden, dass durch Partikelablagerungen bedingte Verschmutzungen im Bereich der äußeren Lichtpfade L2 sowie der optischen Komponenten, insbesondere der beiden optischen Prismen 101, 102 vermieden oder zumindest minimiert werden. Durch die Verwendung asphärischer können deren Brennweiten f und so die äußeren Lichtpfade variiert werden. Vorzugsweise ist die Brennweite f der dem Detektionsbereich DB zugewandten zweiten Linsen 121 größer als die Brennweite f der dem Lichtempfänger bzw. dem Lichtsender zugewandten ersten Linsen, wodurch eine kompakte Bauweise und gleichzeitig ein Schutz vor Verschmutzungen erzielt wird, indem der Abstand der optischen Prismen 101, 102 zum fluiddurchströmten Detektionsbereich DB erhöht ist. Im Bereich des Strömungsauslass 252 ist eine Düse 254 innerhalb des Strömungskanals 250 angeordnet, die eine Luftstrommessung basierend auf einem Differenzdrucksensor ermöglicht.

In der Figur 3 sind das erste optische Prisma 101 und das zweite optische Prisma 102 in einer perspektivischen Einzeldarstellung in Montageöffnungen der Leiterplatte 310 fixiert gezeigt. Das Gehäuse 200, insbesondere die zwischen Leiterplatte 310 und den Prismen 101, 102 angeordnete Oberschale 210 (s. Figur 1) sind zur Übersichtlichkeit ausgeblendet. Gut zu erkennen ist, dass das erste und das zweite optische Prisma 101, 102 baugleich bzw. identisch sind, und um deren Längsachse zueinander verdreht, den sogenannten Streulichtwinkel miteinander einschließend ausgerichtet. Diese, für einen Streulichtdetektor typische Ausrichtung der Prismen 101, 102 zueinander ist rein beispielhaft zu verstehen. Davon abweichend könnten die Prismen 101, 102 in der Ausführungsvariante eines Durchlichtdetektors bspw. einander gegenüberliegend angeordnet sein. Mögliche Drehrichtungen bzw. Streulichtwinkel der beiden Prismen 101, 102 zueinander werden durch an der Leiterplatte 310 als Montageöffnungen ausgeführte, dritte Ausrichtmittel 313 vorgegeben. Im gezeigten Beispiel weist die Leiterplatte 310 für jedes der Prismen 101, 102 zwei solcher Montageöffnungen auf. Zwischen diesen beiden Montageöffnungen ist jeweils eine weitere Montageöffnung zur Aufnahme des Lichtsenders 320, insbesondere einer Leuchtdiode bzw. des Lichtempfängers 330, insbesondere einer Photodiode angeordnet.

Die Prismen 101, 102 sind im hier gezeigten Ausführungsbeispiel aus zwei sich deckungsgleich gegenüberliegenden und als rechtwinkliges, gleichschenkliges Dreieck ausgebildeten Grundflächen sowie einer sich entsprechend aus zwei quadratischen und einem rechteckigen Flächenteil zusammensetzenden Mantelfläche gebildet. Die beiden quadratischen Flächenteile der Mantelfläche entsprechen einer ersten Prismenfläche 110 und einer zweiten Prismenfläche 120, die als Lichtein- oder Lichtaustrittsfläche fungieren. Über die erste oder die zweite Prismenfläche 110, 120 in das Innere des Prismas 101, 102 eintretende Lichtstrahlen werden an einer dem rechteckigen Flächenteil der Mantelfläche entsprechenden innenliegenden Reflexionsfläche 130 reflektiert und treten über die jeweils andere Prismenfläche 110, 120 aus dem Inneren des Prismas 101, 102 aus.

An der ersten Prismenfläche 110 ist eine erste Linse 111 und an der zweiten Prismenfläche 120 eine zweite Linse 121 angeordnet. Die beiden Linsen 111, 121 sind jeweils als plankonvexe Sammellinsen, von der ersten bzw. der zweiten Prismenfläche 110, 120 ausgehend nach außen weisend geformt und umfassen eine kreisförmige Grundfläche, die in die quadratische Grundfläche der ersten bzw. zweiten Prismenfläche 110, 120 einbeschrieben ist. Die hier gezeigten Linsen 111, 121 sind asphärisch ausgebildet, selbstverständlich könnten aber auch vollständig sphärische Linsen verwendet werden. Die erste Prismenfläche 110 eines jeweiligen Prismas 101, 102 ist der Leiterplatte 310 gegenüberliegend angeordnet und weist in deren vier Ecken, außerhalb der kreisförmigen Grundfläche der ersten Linse 111 positioniert, insgesamt vier Abstandshalter 112 auf. Vorzugsweise sind das Prisma 101, 102, die jeweiligen Linsen 111, 121 und die Abstandshalter 112 einstückig mittels eines Spritzgussverfahrens hergestellt.

Die Abstandshalter 112 legen den Abstand zu der Leiterplatte 310 und folglich zu dem daran montierten Lichtsender 320 bzw. Lichtempfänger 330 fest. Vorzugsweise ist die Länge eines Abstandshalters 112 gleich oder kleiner der Brennweite f der ersten Linse 111, sodass deren Brennpunkt auf oder hinter dem Lichtsender 320 bzw. dem Lichtempfänger 330 liegt. Jeweils zwei der vier Abstandshalter 112 eines Prismas 101, 102 sind in der Art von Steckmitteln (s. auch Figur 2) zum formschlüssigen Eingriff in das dritte Ausrichtmittel 313 der Leiterplatte 310, hier die komplementär angeordneten Montageöffnungen, ausgebildet und können darin fixiert werden. Durch die als Steckmittel ausgebildeten Abstandshalter 112 und das dritte Ausrichtmittel 313 kann das jeweilige Prisma 101, 102 in grundsätzlich zwei Stellungen bzw. Drehrichtungen mit der Leiterplatte 310 verbunden werden. Nach einer optionalen und hier nicht gezeigten Ausführung ist es alternativ auch denkbar, die vier Abstandshalter 112 so unterschiedlich zu konstruieren, dass das jeweilige Prisma 101, 102 in lediglich einer einzigen Stellung oder Drehrichtung mit der Leiterplatte 310 verbindbar ist.

Eine schematische Darstellung der durch zwei optische Prismen 100 gemäß einer beispielhaften Erfindungsvariante definierten Lichtpfade L1, L2 ist der Figur 4 zu entnehmen. Die jeweiligen ersten Prismenflächen 110 sind dem Lichtsender 320 oder dem Lichtempfänger 330 derart gegenüberliegend angeordnet, dass der Lichtempfänger 330 die erste Prismenfläche 110 orthogonal passierend ins Innere des Prismas 100 "blickt" und vom Lichtsender 320 ausgesendete Lichtstrahlen einem durch den Lichtsender 320 definierten, äußeren Lichtpfad L2 folgend, die erste Prismenfläche 110 orthogonal passierend ins Innere des Prismas 100 eintreten. Die an der ersten Prismenfläche 110 angeordnete erste Linse 111 richtet dort eintretende Lichtstrahlen zueinander parallel und entlang des inneren Lichtpfads L1 verlaufend auf einen inneren Teilbereich 131 der innenliegenden Reflexionsfläche 130 aus. Der den inneren Teilbereich 131 umgebende und optisch nicht relevante äußere Teilbereich der Reflexionsfläche 130 kann zur Ausrichtung des Prismas 100 genutzt werden und weist hierzu an der der Reflexionsfläche 130 gegenüberliegend angeordneten und nach außen weisende Außenfläche entsprechende Anlagebereiche 132 auf. Im gezeigten Beispiel treffen die Lichtstrahlen einen Grenzwinkel von 45° mit einer Lotgeraden der innenliegenden Reflexionsfläche 130 einschließend darauf auf und werden einen Reflexionswinkel von ebenfalls 45° mit der Lotgeraden einschließend vollständig in Richtung der zweiten Prismenfläche 120, dem inneren Lichtpfad L1 weiter folgend reflektiert. Die zweite Linse 121 fokussiert über die zweite Prismenfläche 120 aus dem Prisma 100 austretende Lichtstrahlen entlang des äußeren Lichtpfads L2. Beide Prismen 100 sind derart zueinander ausgerichtet, dass die von der zweiten Prismenfläche 120 ausgehenden äußeren Lichtpfade L2 einander überlagern und so den Detektionsbereich DB definieren. Auf diese Weise können an im Detektionsbereich DB befindlichen Partikeln gestreute Lichtstrahlen den Lichtpfaden L1, L2 folgend vom Lichtempfänger 330 erfasst werden.

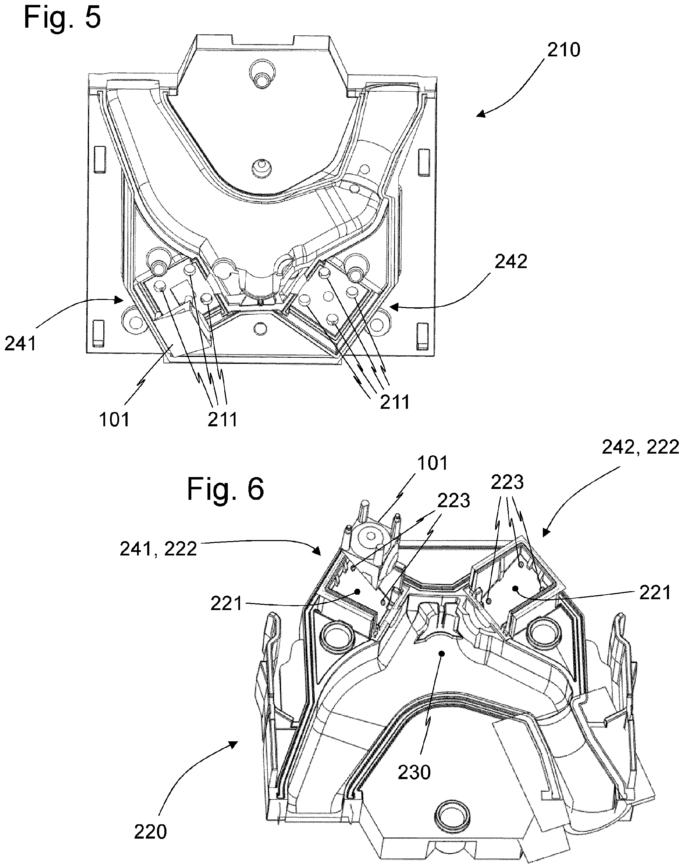

Der Figur 5 kann eine perspektivische Darstellung der Oberschale 210 aus der Figur 1 entnommen werden. Aus Gründen der Übersichtlichkeit ist hier lediglich noch das erste optische Prisma 101 gezeigt, die übrigen Bestandteile der Partikeldetektionseinheit 300 sind ausgeblendet. Gut zu erkennen sind die in der Oberschale 210 gebildeten ersten Ausrichtmittel 211 des ersten und des zweiten Prismensitzes 241, 242. Die ersten Ausrichtmittel 211 sind jeweils in der Art von vier Führungsdurchlässen realisiert, die im Betriebszustand, wenn die Prismen 101, 102 durch den jeweiligen Prismensitz 241, 242 aufgenommen und ausgerichtet sind, von den komplementär dazu angeordneten Abstandshaltern 112 des jeweiligen Prismas 101, 102 durchsetzt sind. Zwischen den ersten Ausrichtmitteln 211 ist jeweils eine weitere Öffnung zum Durchlass der vom Lichtsender 320 gesendeten bzw. der vom Lichtempfänger 330 zu empfangenden Lichtstrahlen ausgebildet.

Eine perspektivische Darstellung der Unterschale 220 aus der Figur 1 ist in der Figur 6 gezeigt. Wiederum sind die übrigen Bestandteile der Partikeldetektionseinheit 300, mit Ausnahme des ersten optischen Prismas 101 ausgeblendet. Durch die Unterschale 220 ist jeweils ein zweites Ausrichtmittel 222 des ersten und des zweiten Prismensitzes 241, 242 gebildet. Das zweite Ausrichtmittel 222 umfasst hier eine rechteckige Ausrichtfläche 221, deren Abmessungen den Abmessungen der innenliegenden Reflexionsfläche 130 der Prismen 101, 102 entsprechen sowie drei seitliche, daran angrenzende Wandungen.

Die Ausrichtflächen 221 sind in der Ausführungsvariante eines Streulichtdetektors den gewünschten Streulichtwinkel einschließend zueinander ausgerichtet und schräg angestellt, sodass die parallel dazu verlaufenden inneren Reflexionsflächen 130 der beiden Prismen 101, 102 durch Überlagerung von durch an den Reflexionsflächen 130 reflektierten Lichtstrahlen definierten Lichtpfaden L1, L2 einen Detektionsbereich DB (s. Figur 4) innerhalb der von der Oberschale 210 und der Unterschale 220 begrenzten Detektionskammer 230 festlegen. Damit die der Reflexionsfläche 130 gegenüberliegende und nach außen weisende Außenfläche der Prismen 101, 102 nicht direkt mit der Ausrichtfläche 221 in Kontakt gelangt, weist letztere insgesamt vier, in den Eckbereichen der Ausrichtfläche 221 angeordnete Anlagepunkte 223 auf, an denen sich beim Einsetzen des optischen Prismas 101, 102 entsprechende Anlagebereiche 132 (s. wiederum Figur 4) abstützen.

Das zweite Ausrichtmittel 222, insbesondere dessen Ausrichtfläche 221 zusammen mit den drei seitlichen Wandungen, stellt sicher, dass das jeweilige Prisma 101, 102 ausschließlich in einer einzigen Stellung, die der gewünschten Positionierung und Ausrichtung zum Lichtsender 320 bzw. Lichtempfänger 330 und zum jeweils anderen Prisma 101, 102 entspricht, in die Prismensitze 241, 242 eingesetzt werden kann. Die Abstandshalter 112 stellen den gewünschten Abstand zur Leiterplatte 130, insbesondere zu dem daran montierten Lichtsender 320 bzw. Lichtempfänger 330 her (s. auch Figur 3). Durch die einstückig ausgebildete Ober- und Unterschale 210, 220 ist sichergestellt, dass der Detektionsbereich (DB) in Relation zu den Prismensitzen 241, 242 an der gewünschten Position innerhalb der Detektionskammer 230 gebildet und vorzugsweise von der entlang des Strömungskanals 250 verlaufenden Fluidströmung durchströmt wird. Bei der Montage oder bei Wartungsarbeiten wird durch die Ausrichtmittel 211, 222, 313 eine selbstausrichtende Aufnahme eines jeweiligen, identischen oder baugleichen Prismas 101, 102 durch die Prismensitze 241, 242 ermöglicht.

### Bezugszeichenliste:

- 100: optisches Prisma
- 101: erstes optisches Prisma
- 102: zweites optisches Prisma
- 110: erste Prismenfläche
- 111: erste Linse
- 112: Abstandshalter
- 120: zweite Prismenfläche
- 121: zweite Linse
- 130: innenliegende Reflexionsfläche
- 131: innerer Teilbereich
- 132: Anlagebereich

- 200: Gehäuse
- 210: Oberschale
- 211: erstes Ausrichtmittel
- 220: Unterschale
- 221: Ausrichtfläche
- 222: zweites Ausrichtmittel
- 223: Anlagepunkt
- 230: Detektionskammer
- 241: erster Prismensitz
- 242: zweiter Prismensitz
- 250: Strömungskanal
- 251: Strömungseinlass
- 252: Strömungsauslass
- 253: Strömungsmittel
- 254: Düse

- 300: Partikeldetektionseinheit
- 310: Leiterplatte
- 311: Verbindungselement
- 313: drittes Ausrichtmittel
- 320: Lichtsender
- 330: Lichtempfänger
- 340: Abdeckplatte

- DB: Detektionsbereich
- L1: innerer Lichtpfad
- L2: äußerer Lichtpfad

- z: z-Achse der Partikeldetektionseinheitde

## Patentansprüche

1. Optisches Prisma (100, 101, 102) für eine Partikeldetektionseinheit (300), welches Prisma (100, 101, 102) eine erste Prismenfläche (110) und eine zweite Prismenfläche (120) umfasst, über welche jeweils Lichtstrahlen in das Innere des optischen Prismas (100, 101, 102) ein- oder austreten können, sowie eine innenliegende Reflexionsfläche (130), die im Inneren des optischen Prismas (100, 101, 102) verlaufende und darauf auftreffende Lichtstrahlen reflektiert,
**dadurch gekennzeichnet, dass**
die erste Prismenfläche (110) eine erste Linse (111) und die zweite Prismenfläche (120) eine zweite Linse (121) aufweist,
- die einen im Inneren des Prismas (100, 101, 102) verlaufenden, inneren Lichtpfad (L1) definierend ausgebildet sind, sodass entweder über die erste Prismenfläche (110) oder über die zweite Prismenfläche (120) in das Innere des Prismas (100, 101, 102) eintretende Lichtstrahlen entlang des inneren Lichtpfads (L1) auf die innenliegende Reflexionsfläche (130) ausgerichtet werden, und
- die einen außerhalb des Prismas (100, 101, 102) verlaufenden, äußeren Lichtpfad (L2) definierend ausgebildet sind, sodass entweder über die erste Prismenfläche (110) oder über die zweite Prismenfläche (120) aus dem Inneren des Prismas (100, 101, 102) austretende Lichtstrahlen entlang des äußeren Lichtpfads (L2) ausgerichtet werden.

2. Prisma (100, 101, 102) nach Anspruch 1,
**dadurch gekennzeichnet, dass**
die erste Linse (111) und die zweite Linse (121), den äußeren Lichtpfad (L2) definierend, jeweils zur Fokussierung von über die erste Prismenfläche (110) oder über die zweite Prismenfläche (120) aus dem Inneren des Prismas (100, 101, 102) austretenden Lichtstrahlen, in einem jeweiligen, vorab festgelegten Abstand zu der ersten Prismenfläche (110) bzw. zu der zweiten Prismenfläche (120) ausgebildet sind.

3. Prisma (100, 101, 102) nach Anspruch 1 oder 2,
**dadurch gekennzeichnet, dass**
die erste Linse (111) und die zweite Linse (121), den inneren Lichtpfad (L1) definierend, jeweils derart ausgebildet sind, dass entweder über die erste Prismenfläche (110) oder über die zweite Prismenfläche (120) in das Innere des Prismas (100, 101, 102) eintretende Lichtstrahlen zueinander parallel verlaufend und einen festgelegten Grenzwinkel mit einer Lotgeraden der innenliegenden Reflexionsfläche (130) einschließend auf die innenliegende Reflektionsfläche (130) ausgerichtet sind, wobei der Brechungsindex n des Materials, aus welchem das Prisma (100, 101, 102) hergestellt ist, und der mit der innenliegenden Reflexionsfläche (130) eingeschlossene Grenzwinkel derart zueinander festgelegt sind, dass die Lichtstrahlen unter Totalreflexion, vollständig an der innenliegenden Reflektionsfläche (130) reflektiert werden.

4. Prisma (100, 101, 102) nach einem der vorhergehenden Ansprüche,
**dadurch gekennzeichnet, dass**
die erste Prismenfläche (110) mit Abstandshaltern (112) zur insbesondere formschlüssigen Kopplung mit einem komplementären Ausrichtmittel (211, 313) einer Partikeldetektionseinheit (300), insbesondere eines Prismensitzes (241, 242) eines Gehäuses (200) einer Partikeldetektionseinheit (300), versehen ist, wobei die Abstandshalter (112) so ausgebildet sind, dass deren Länge einem vorab festlegbaren Abstand zu der ersten Prismenfläche (110) entspricht.

5. Prisma (100, 101, 102) nach Anspruch 4,
**dadurch gekennzeichnet, dass**
die Länge der Abstandshalter (112) gleich oder kleiner der Brennweite f der ersten Linse (111) ist.

6. Prisma (100, 101, 102) nach einem der Ansprüche 4 oder 5,
**dadurch gekennzeichnet, dass**
die Abstandshalter (112) außerhalb der durch die erste Linse (111) und die zweite Linse (121) definierten Lichtpfade (L1, L2) liegend mit der ersten Prismenfläche (110) verbunden sind.

7. Prisma (100, 101, 102) einem der vorhergehenden Ansprüche,
**dadurch gekennzeichnet, dass**
die erste Linse (111) und die zweite Linse (121), den inneren Lichtpfad (L1) definierend, jeweils derart ausgebildet sind, dass entweder über die erste Prismenfläche (110) oder über die zweite Prismenfläche (120) in das Innere des Prismas (100, 101, 102) eintretende Lichtstrahlen auf einen inneren Teilbereich (131) der innenliegenden Reflexionsfläche (130) auftreffend ausgerichtet werden.

8. Prisma (100, 101, 102) nach einem der vorhergehenden Ansprüche,
**dadurch gekennzeichnet, dass**
das Prisma (100, 101, 102) an der der innenliegenden Reflexionsfläche (130) gegenüberliegenden und nach außen weisenden Außenfläche einen oder mehrere Anlagebereiche (132) aufweist, die zur Ausrichtung der Reflexionsfläche (130) anhand eines komplementären Ausrichtmittels (222) eines Prismensitzes (241, 242) eines Gehäuses (200) für eine Partikeldetektionseinheit (300) geeignet sind, und außerhalb der durch die erste Linse (111) und die zweite Linse (121) definierten Lichtpfade (L1, L2) liegend angeordnet sind.

9. Gehäuse (200) für eine Partikeldetektionseinheit (300), welches Gehäuse (200) eine Oberschale (210) und eine Unterschale (220) aufweist, die zur Begrenzung einer innerhalb des Gehäuses (200) angeordneten und von Umgebungslicht abgeschirmten Detektionskammer (230) miteinander verbindbar sind,
**dadurch gekennzeichnet, dass**
die Oberschale (210) und die Unterschale (220) gemeinsam zwei Prismensitze (241, 242) zur zueinander ausgerichteten Aufnahme jeweils eines optischen Prismas (100, 101, 102), insbesondere nach einem der vorhergehenden Ansprüche ausbilden, sodass außerhalb der Prismen (100, 101, 102) verlaufende Lichtpfade (L2), die durch an einer jeweiligen innenliegenden Reflexionsfläche (130) des Prismas (100, 101, 102) reflektierte Lichtstrahlen definiert sind, einen Detektionsbereich (DB) innerhalb der Detektionskammer (230) definierend einander überlagernd ausgerichtet sind.

10. Gehäuse (200) nach Anspruch 9,
**dadurch gekennzeichnet, dass**
die Prismensitze (241, 242) jeweils mindestens ein Ausrichtmittel (211, 222) aufweisen, welches zur selbstausrichtenden Aufnahme des jeweiligen Prismas (100, 101, 102) außerhalb der Lichtpfade (L1, L2) angeordnet ist.

11. Gehäuse (200) nach einem der Ansprüche 9 oder 10,
**dadurch gekennzeichnet, dass**
ein erstes Ausrichtmittel (211) eines Prismensitzes (241, 242) als Führungsdurchlässe realisiert ist, die zur Aufnahme und Führung von komplementären, mit einer ersten Prismenfläche (110) des Prismas (100, 101, 102) verbundenen Abstandshaltern (112), außerhalb der Lichtpfade (L1, L2) angeordnet sind.

12. Gehäuse (200) nach einem der Ansprüche 9 bis 11,
**dadurch gekennzeichnet, dass**
ein zweites Ausrichtmittel (222) eines Prismensitzes (241, 242) eine Ausrichtfläche (221) mit einem oder mehreren, außerhalb der Lichtpfade (L1, L2) liegenden und an der Ausrichtfläche (221) angeordneten Anlagepunkten (223) aufweist, sodass die innenliegende Reflexionsfläche (130) des Prismas (100, 101, 102) parallel und beabstandet zur Ausrichtfläche (221) ausrichtbar ist, indem eine der Reflexionsfläche (130) gegenüberliegende und nach außen weisende Außenfläche des Prismas (100, 101, 102) mittels komplementärer Anlagebereiche (132) an dem einen oder den mehreren Anlagepunkten (223) anliegt.

13. Gehäuse (200) nach einem der Ansprüche 9 bis 12,
**dadurch gekennzeichnet, dass**
die Oberschale (210) und die Unterschale (220) gemeinsam einen Strömungskanal (250) mit einem Strömungseinlass (251) und einem Strömungsauslass (252) zur Ausbildung eines durch die Detektionskammer (230) verlaufenden Strömungspfads bilden, wobei der Strömungskanal (250) und die Prismensitze (241, 242) derart zueinander ausgerichtet sind, dass der Strömungspfad den Detektionsbereich (DB) durchquerend ausgebildet ist.

14. Gehäuse (200) nach Anspruch 13,
**dadurch gekennzeichnet, dass**
der Strömungskanal (250) ein Strömungsmittel (253) aufweist, das zur Umlenkung einer entlang des Strömungspfads verlaufenden Fluidströmung innerhalb der Detektionskammer (230) angeordnet ist.

15. Partikeldetektionseinheit (300) mit
- einem ersten optischen Prisma (101) und einem zweiten optischen Prisma (102), jeweils nach einem der Ansprüche 1 bis 8,
- einem Gehäuse (200), nach einem der Ansprüche 9 bis 14, welches Gehäuse (200) eine darin angeordnete und von Umgebungslicht abgeschirmte Detektionskammer (230) begrenzt sowie einen ersten Prismensitz (241) und einen zweiten Prismensitz (242) aufweist, wobei die Prismen (101, 102) jeweils innerhalb eines Prismensitzes (241, 242) angeordnet und zueinander ausgerichtet sind,
- einer Leiterplatte (310) und
- einem Lichtsender (320) zum Aussenden von Lichtstrahlen in einer Ausstrahlrichtung sowie einem Lichtempfänger (330) zum Empfangen von in einem Einfallsbereich des Lichtempfängers (330) einfallenden Lichtstrahlen,
**dadurch gekennzeichnet, dass**
der Lichtsender (320) mit dem ersten Prismensitz (241) und der Lichtempfänger (330) mit dem zweiten Prismensitz (242) zusammenwirkend auf derselben Leiterplatte (310) positioniert sind, sodass vom Lichtsender (320) in Ausstrahlrichtung gesendete Lichtstrahlen eine erste Prismenfläche (110) des durch den ersten Prismensitz (241) ausgerichteten ersten Prismas (101) passierend auf dessen innenliegende Reflexionsfläche (130) auftreffen und der Einfallsbereich des Lichtempfängers (330) eine erste Prismenfläche (110) des durch den zweiten Prismensitz (242) ausgerichteten zweiten Prismas (102) passierend auf dessen innenliegende Reflexionsfläche (130) ausgerichtet ist.

16. Partikeldetektionseinheit (300) nach Anspruch 15,
**dadurch gekennzeichnet, dass**
die erste Prismenfläche (110) des ersten Prismas (101) und die erste Prismenfläche (110) des zweiten Prismas (102) jeweilige Abstandshalter (112) aufweisen, die einen vorab festgelegten Abstand zwischen der ersten Prismenfläche (110) und dem Lichtsender (320) bzw. dem Lichtempfänger (330) definierend in komplementäre dritte Ausrichtmittel (313) der Leiterplatte (310) insbesondere formschlüssig eingreifen.

17. Partikeldetektionseinheit (300) nach Anspruch 16,
**dadurch gekennzeichnet, dass**
die Leiterplatte (310) außerhalb des Gehäuses (200) angeordnet und mit diesem verbunden ist, wobei die Abstandshalter (112) komplementäre, als Führungsdurchlässe realisierte erste Ausrichtmittel (211) des jeweiligen Prismensitzes (241, 242) durchsetzend geführt und in den dritten Ausrichtmitteln (313) der Leiterplatte (310) fixiert sind oder sich an der Leiterplatte (310) abstützen.

18. Partikeldetektionseinheit (300) nach einem der Ansprüche 15 bis 17,
**dadurch gekennzeichnet, dass**
die Partikeldetektionseinheit (300) ein signalübertragend mit dem Lichtsender (320) und dem Lichtempfänger (330) verbundenes Steuerungsmodul umfasst, welches Steuerungsmodul eine Speichereinheit zur Hinterlegung einer Programmierung für die Ansteuerung des Lichtsenders (320) und des Lichtempfängers (330) sowie für die Auswertung von Signalen, die auf vom Lichtempfänger (330) erfassten Lichtstrahlen basieren, aufweist.
